# EUROPÄISCHE PATENTSCHRIFT

(11) **EP 4 158 752 B1**
(45) Veröffentlichungstag und Bekanntmachung des Hinweises auf die Patenterteilung: **09.07.2025**
(21) Anmeldenummer: 21725020.8
(22) Anmeldetag: 03.05.2021
(51) Int. Cl.: H02K 1/14, H02K 3/28, H02K 21/24, H02K 3/18

(54) **STATOR FÜR EINE ELEKTRISCHE AXIALFLUSSMASCHINE UND ELEKTRISCHE AXIALFLUSSMASCHINE**
STATOR FOR AN ELECTRIC AXIAL FLUX MACHINE AND ELECTRIC AXIAL FLUX MACHINE
STATOR POUR UNE MACHINE À FLUX AXIAL ÉLECTRIQUE, ET MACHINE À FLUX AXIAL ÉLECTRIQUE

(30) Priorität: 29.05.2020 DE 102020114441
(43) Veröffentlichungstag der Anmeldung: 05.04.2023
(73) Patentinhaber: Schaeffler Technologies AG & Co. KG, 91074 Herzogenaurach (DE)
(72) Erfinder: HANS, Dominik, 76461 Muggensturm (DE); WITT, Holger, 77815 Bühl (DE)
(86) Internationale Anmeldenummer: PCT/DE2021/100399
(87) Internationale Veröffentlichungsnummer: WO 2021/239179

(56) Entgegenhaltungen:
- CN-A- 109 274 240

## Beschreibung

Die vorliegende Erfindung betrifft einen Stator für eine elektrische Axialflussmaschine, insbesondere Stator für eine als Antriebsmaschine für ein elektrisch angetriebenes Kraftfahrzeug ausgebildete permanenterregte Axialflussmaschine, umfassend einen Statorkörper mit einer Vielzahl von über den Umfang verteilt angeordneten Statorzähnen und mit Statorwicklungen, welche um die Statorzähne herum angeordnet sind, welche mit Vorteil um eine Mehrzahl der Statorzähne herum gewickelt und jeweils als Einzelzahnwicklung konzentrierte Wicklung ausgebildet sind. Ferner betrifft die Erfindung eine elektrische Axialflussmaschine.

Im Stand der Technik sind Axialflussmaschinen bereits hinlänglich bekannt.

Aus der EP 2 985 893 A1 ist eine elektrische Axialflussmaschine mit einem Stator und einem Rotor bekannt, wobei der Stator mindestens zwei Statorsegmente umfasst, und wobei der Rotor mit einer Rotorwelle verbunden ist, wobei der Rotor und/oder die Rotorwelle in einer Lagerung drehbar gelagert sind, und wobei die Statorsegmente in Rotationsrichtung des Rotors relativ zu der Lagerung unbeweglich angeordnet sind. Mindestens eines der Statorsegmente ist in axialer oder radialer Richtung relativ zu der Lagerung beweglich angeordnet, um die Breite des Luftspalts zwischen Rotor und Statorsegmenten einzustellen.

Eine elektrische Axialflussmaschine gemäß dem Oberbegriff des Anspruchs 1 ist aus der CN 109 274 240 A bekannt.

Der Erfindung liegt die Aufgabe zugrunde einen Stator für eine Axialflussmaschine bereitzustellen, bei welchem der maximale Strombelag im Vergleich zu Statoren gleicher Baugröße erhöht ist. Ferner liegt der Erfindung die Aufgabe zugrunde eine entsprechende Axialflussmaschine bereitzustellen, bei der der maximale Strombelag innerhalb des Stators erhöht ist.

Bei gegebener Anzahl von Statorzähnen bei einer Axial-Fluss-Maschine steht für jeden Statorzahn ein fester Winkelbereich zur Verfügung. Somit steht radial weiter innen eine kleinere Umfangslänge zur Verfügung als bei radial weiter außen liegenden Bereichen der Statorzähne. Die verfügbare Umfangslänge teilt sich auf Flussleitelement, Wicklung, Isolierung, etc. auf. Beim Stand der Technik haben die Wicklungen und die Isolierung in der Regel einen konstanten Querschnitt entlang der Wicklung um das Flussleitelement. Hierdurch beanspruchen Wicklung und Isolierung bei kleineren Radien einen immer größeren Winkelbereich während für das Flussleitelement ein immer kleinerer Winkelbereich zur Verfügung steht. Um eine Mindestbreite der Flussleitelemente nicht zu unterschreiten, sind die Umfangsbreiten und somit die Querschnitte der Wicklung und Isolierung begrenzt.

Die der Erfindung zugrunde liegende Aufgabe wird gelöst durch einen Stator für eine elektrische Axialflussmaschine, insbesondere eine permanenterregte Axialflussmaschine, mit den Merkmalen des Patentanspruchs 1 sowie durch eine elektrische Maschine mit den Merkmalen des Patentanspruchs 10.

Eine elektrische Axialflussmaschine gemäß der Erfindung umfasst einen Statorkörper mit einer Vielzahl von über den Umfang verteilt angeordneten Statorzähnen sowie Statorwicklungen (3), welche um die Statorzähne (11) herum angeordnet sind.

Zumindest einer der bewickelten Statorzähne - bevorzugt alle Statorzähne - ist/sind in radialer Richtung gesehen in mindestens zwei Stator-Teilzähne aufgeteilt, wobei die zumindest zwei Stator-Teilzähne mit einer unterschiedlichen Anzahl von Windungen der Statorwicklung bewickelt sind. Die beiden Stator-Teilzähne sind mit einer unterschiedlichen Anzahl von Windungen der gleichen Phase der Statorwicklung bewickelt. Mit Vorteil sind dabei die zumindest zwei Stator-Teilzähne über eine sich in Umfangsrichtung erstreckende und in axialer Tiefe ausgebildete Trennnut in radialer Richtung beabstandet. Durch die erfindungsgemäß vorgeschlagene Aufteilung der Statorzähne und der Wicklungen kann in radial weiter außenliegenden Bereichen des Stators mehr Wicklungsquerschnitt angeordnet werden, ohne dass dafür die Zahnbreite in radial weiter innen liegenden Bereichen des Stators in Umfangsrichtung ungünstig klein ausfallen muss. Im vorliegenden Ausführungsbeispiel ist der Statorkörper als segmentierter Statorkörper mit einer Vielzahl von umfänglich zu einem kreisringförmigen Statorkörper zusammengesetzten Statorsegmenten bzw. einzelnen Segmente bildenden Stator-Einzelzähnen gebildet. Alternativ kann der Statorkörper auch einteilig ausgebildet sein.

Zunächst werden die einzelnen Elemente des beanspruchten Erfindungsgegenstandes in der Reihenfolge ihrer Nennung im Anspruchssatz erläutert und nachfolgend besonders bevorzugte Ausgestaltungen des Erfindungsgegenstandes beschrieben.

Der magnetische Fluss in einer elektrischen Axialflussmaschine (AFM), wie beispielsweise eine als Axialflussmaschine ausgebildete elektrische Antriebsmaschine eines Kraftfahrzeugs, ist im Luftspalt zwischen Stator und Rotor axial zu einer Rotationsrichtung des Rotors der Axialflussmaschine gerichtet. Es gibt unterschiedliche Typen von Axialflussmaschinen. Ein bekannter Typ ist eine sogenannte I-Anordnung, bei der der Rotor axial neben einem Stator oder zwischen zwei Statoren angeordnet ist. Ein anderer bekannter Typ ist eine sogenannte H-Anordnung, bei der zwei Rotoren auf gegenüberliegenden axialen Seiten eines Stators angeordnet sind.

Der Stator einer elektrischen Axialflussmaschine weist einen Statorkörper mit mehreren in Umfangsrichtung angeordneten Statorwicklungen auf. Der Statorkörper kann in Umfangsrichtung gesehen einteilig oder segmentiert ausgebildet sein. Der Statorkörper kann aus einem Statorblechpaket mit mehreren laminierten Elektroblechen gebildet sein. Alternativ kann der Statorkörper auch aus einem verpressten weichmagnetischen Material, wie dem sogenannten SMC-Material (Soft Magnetic Compound) gebildet sein.

Als Rotorwelle wird eine drehbar gelagerte Welle einer elektrischen Maschine bezeichnet, mit der der Rotor bzw. Rotorkörper drehfest gekoppelt ist.

Der Rotor einer elektrischen Axialflussmaschine kann zumindest in Teilen als geblechter Rotor ausgebildet sein. Ein geblechter Rotor ist in axialer Richtung geschichtet ausgebildet. Der axiale Magnetfluss muss dabei die Kleber- bzw. Isolationsschichten zwischen den gestapelten einzelnen Elektroblechen überwinden, wodurch der Magnetkreis eine Scherung (zusätzlicher Luftspalt) erfährt und an Effizienz verliert. Der Rotor einer Axialflussmaschine kann alternativ auch einen Rotorträger aufweisen, der entsprechend mit Magnetblechen und/oder SMC-Material und mit als Permanentmagneten ausgebildeten Magnetelementen bestückt ausgebildet ist.

Vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Gemäß einer vorteilhaften Ausgestaltung der Erfindung kann vorgesehen sein, dass tatsächlich jeder der bewickelten Statorzähne in radialer Richtung gesehen in mindestens zwei Stator-Teilzähne aufgeteilt ist, wodurch der optimierte Wicklungsquerschnitt der Axialflussmaschine vollumfänglich genutzt wird.

Es kann gemäß einer weiteren bevorzugten Weiterentwicklung der Erfindung auch vorgesehen sein, dass die Statorwicklung eines Statorzahns in zumindest zwei Teilgruppen unterteilt ist. Dabei umschließt eine erste Teilgruppe der Statorwicklung den radial äußersten Stator-Teilzahn und jede weitere Teilgruppe jeweils zusätzlich den nächsten radial in Richtung Statormittelachse X angeordneten Stator-Teilzahn, wobei die letzte Teilgruppe alle Stator-Teilzähne umschließt. Es kann hierdurch eine besonders effiziente Bewicklung der Statorzähne mit hohem Wicklungsquerschnitt besonders in den radial äußeren Bereichen erreicht werden, ohne dass die Flussleitelemente in den radial inneren Bereichen ungünstig schmal ausgeführt werden müssen. Hierdurch kann ein konstanteres Verhältnis von Wicklungsquerschnitt zu Flussleitmaterial auf den unterschiedlichen Durchmessern erreicht werden.

Alternativ zu der vorstehend beschriebenen Art der Bewicklung eines Statorzahns kann vorgesehen sein, dass die Statorwicklung eines Statorzahns in Teilgruppen unterteilt ist, wobei eine erste Teilgruppe einen zwischen dem radial äußersten Stator-Teilzahn und dem radial innersten Stator-Teilzahn angeordneten Stator-Teilzahn umschließt und jede weitere Teilgruppe jeweils zusätzlich den nächsten radial in Richtung Statormittelachse X und/oder in Richtung radial von der Statormittelachse X weggerichtet angeordneten Stator-Teilzahn umschließt. Hierdurch können Drehmomentschwankungen im Betrieb, z.B. aufgrund Polrasterung, reduziert werden (ähnlich wie bei einer Verschränkung der Magnete gegenüber den Wicklungsnuten). Ferner können ohmsche Verluste und die damit zusammenhängende Erwärmung gezielt in definierten Bereichen des Stators konzentriert werden.

Gemäß einer weiteren besonders bevorzugten Ausführungsform der Erfindung kann es vorgesehen sein, dass die zwischen den Stator-Teilzähnen ausgebildeten Trennnuten kreisbogenförmig mit Zentrum in der Statormittelachse X oder kreisbogenförmig mit Zentrum außerhalb der Statormittelachse X oder geradlinig als Sekante eines Kreises und eine Polygonform bildend ausgebildet sind. Hierdurch lässt sich insbesondere die Montierbarkeit der Wicklungen verbessern. Weiterhin können unnötige Bögen der Wickelköpfe vermieden werden, wodurch der elektrische Wiederstand optimiert werden kann.

Des Weiteren kann die Erfindung auch dahingehend weiterentwickelt sein, dass eine Polschuhkappe trennbar einteilig, über alle Stator-Teilzähne sich erstreckend, stirnseitig am freien axialen Ende einzelner Stator-Teilzähne befestigt ist. Durch die geschlossene Polschuhkappe wird die Festigkeit des Stators erhöht und ein günstigerer Magnetfluss im Luftspalt erreicht.

In einer Weiterbildung der Polschuhkappe kann vorgesehen sein, dass an der Polschuhkappe sich in axialer Richtung erstreckende Teilbereiche einzelner Stator-Teilzähne ausgebildet sind, wobei die Teilbereiche der an der Polschuhkappe mit Teilbereichen der Stator-Teilzähne formschlüssig zusammenwirken, derart, dass in umfänglicher bzw. Tangentialrichtung ein Formschluss zur Drehmomentübertragung gewährleistet ist.

Hierdurch kann erreicht werden, dass die Umfangskräfte in besonders einfacher und robuster Weise von der Polschuhkappe auf den Stator übertragen werden können.

Auch kann es vorteilhaft sein, die Erfindung dahingehend weiterzuentwickeln, dass in zumindest einer der Trennnuten eines Stator-Teilzahns, in radialer Richtung gesehen, eine einzige oder maximal zwei Lagen einer Teilgruppe der Statorwicklung übereinanderliegend angeordnet sind. Hierdurch kann örtlich gezielt die Kühlung der Wicklungen begünstigt werden.

Gemäß einer weiteren zu bevorzugenden Ausgestaltung des Erfindungsgegenstandes kann vorgesehen sein, dass das der Stator ausgebildet ist eine elektrische Maschine in H-Anordnung mit axial beidseitig angeordneten Rotorkörpern zu betreiben, wobei der Statorkörper bevorzugt spiegelsymmetrisch zu einer Ebene lotrecht zur Drehachse der elektrischen Maschine ausgebildet ist.

Darüber hinaus wird die der Erfindung zugrunde liegende Aufgabe gelöst durch eine elektrische Axialflussmaschine, umfassend zumindest einen Stator sowie einen auf einer Rotorwelle angeordneten ersten Rotorkörper oder umfassend einen Stator sowie einen auf einer Rotorwelle angeordneten ersten Rotorkörper und einen auf der Rotorwelle angeordneten zweiten Rotorkörper, wobei der zumindest eine Stator der Maschine gemäß dem vorstehend beschriebenen Stator ausgebildet ist. Hierdurch wird eine elektrische Axialflussmaschine geschaffen, die im Vergleich zur Axialflussmaschinen gleicher Größe eine einen optimierten Wicklungsquerschnitt der Statorzähne realisiert.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können.

Es zeigen:
- Figur 1:: eine Axialflussmaschine in H-Anordnung mit Einzelzahnwicklung in schematischer Darstellung in Perspektivansicht,
- Figur 2: die Axialflussmaschine gemäß Figur 1 in einer Teil-Explosionsdarstellung,
- Figur 3: einen Statorzahn mit einem Statorzahnkörper (oben) und einer Statorzahnwicklung (unten) eines segmentiert aufgebauten Stators gemäß der Erfindung, in schematischer Darstellung in Perspektivansicht,
- Figur 4: eine Axialflussmaschine in I-Anordnung mit zwei einen Rotor mittig zwischen sich einschließenden und erfindungsgemäß aufgebauten Statoren, in einer Explosionsdarstellung,
- Figur 5: eine Axialflussmaschine in I-Anordnung mit einem axial zu einem Rotor axial benachbart angeordneten und erfindungsgemäß aufgebauten Stator, in einer Explosionsdarstellung, und
- Figur 6: eine Schnittdarstellung durch eine elektrische Maschine, ähnlich aufgebaut wie die elektrische Maschine in Figur 5 oder Figur 1, in schematischer Darstellung.

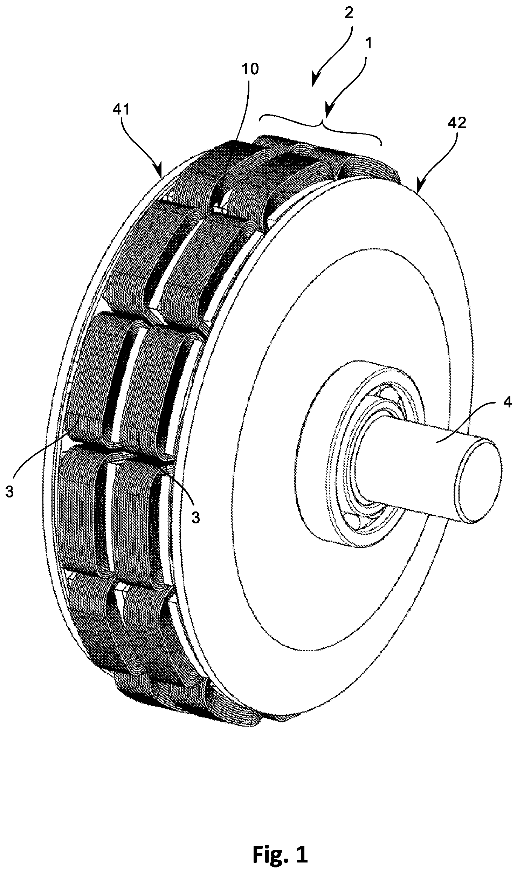

Figur 1 zeigt eine Axialflussmaschine 2 in H-Anordnung mit Einzelzahnwicklung in schematischer Darstellung in Perspektivansicht. Die dargestellte Axialflussmaschine 2 umfasst einen axial mittig zwischen zwei auf einer Rotorwelle 4 angeordneten Rotorkörpern 41, 42 angeordneten Stator 1. Der Stator 1 weist einen Statorkörper mit beidseitig axial nach außen gerichteten Statorzähnen 11 auf, auf denen entsprechende Statorwicklungen 3 als Einzelzahnwicklung ausgebildet aufgebracht sind. Auf der Rotorwelle 4 sind axial außerhalb der beiden Rotorkörper 41, 42 Lager angebracht, um die elektrische Axialflussmaschine 2 in entsprechenden Lageraufnahmen eines Gehäuses drehbar zu lagern.

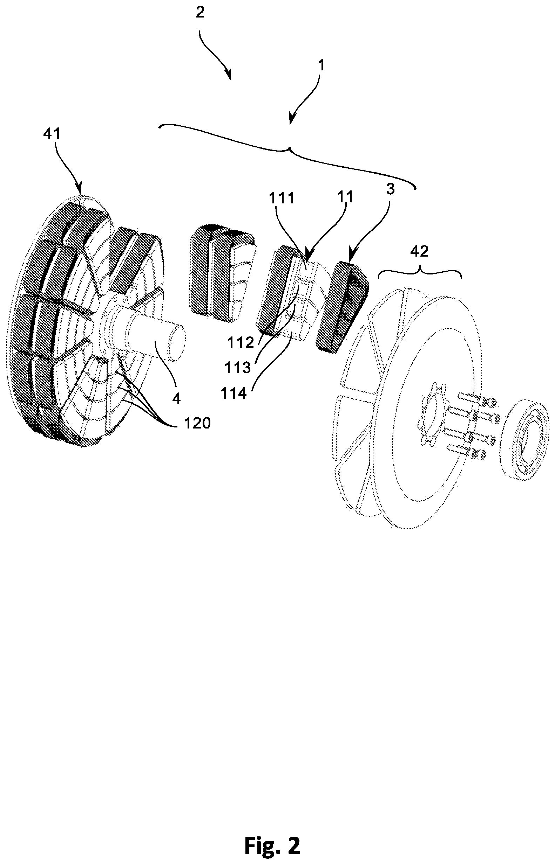

Figur 2 zeigt die Axialflussmaschine 2 gemäß Figur 1 in einer Teil-Explosionsdarstellung. Die permanenterregte elektrische Axialflussmaschine 2 umfasst den axial mittig angeordneten Stator 1 mit einem Statorkörper 10 gebildet aus einer Vielzahl von über den Umfang verteilt angeordneten Statorzähnen 11 und Statorwicklungen 3, welche um jeden einzelnen der Statorzähne 11 herum, als Einzelzahnwicklung konzentrierte Wicklung gewickelt und ausgebildet sind.

Jeder der bewickelten Statorzähne 11 weist in radialer Richtung gesehen vorliegend insgesamt vier Stator-Teilzähne 111, 112, 113, 114 auf, wobei die vier Stator-Teilzähne 111, 112, 113, 114 über eine sich in Umfangsrichtung erstreckende und in axialer Tiefe ausgebildete Trennnut 120 in radialer Richtung beabstandet sind. In der Teil-Explosionsdarstellung ist gut zu erkennen, dass die Statorwicklungen 3 als Einzelzahnwicklungen separat vom Statorzahnkörper 11 gewickelt und später auf den Statorzahnkörper 11 aufgebracht werden können. Der erste und zweite Rotorkörper 41, 42 weisen jeweils eine kreisringförmige Trägerplatte auf, auf der eine Vielzahl, auf die Statorzähne 11 abgestimmter, kuchenstückförmiger Permanentmagnete angeordnet ist. Die Rotorkörper 41, 42 werden mittels insgesamt acht umfänglich verteilt angeordneter Befestigungsschrauben in axialer Richtung an einem auf der Rotorwelle 4 drehfest angebrachten Aufnahmering befestigt.

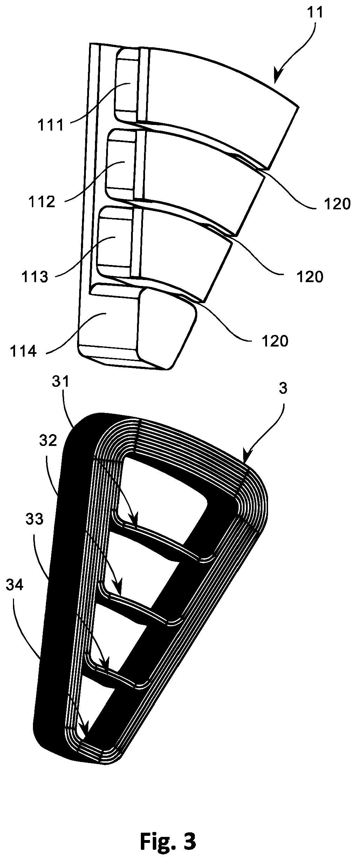

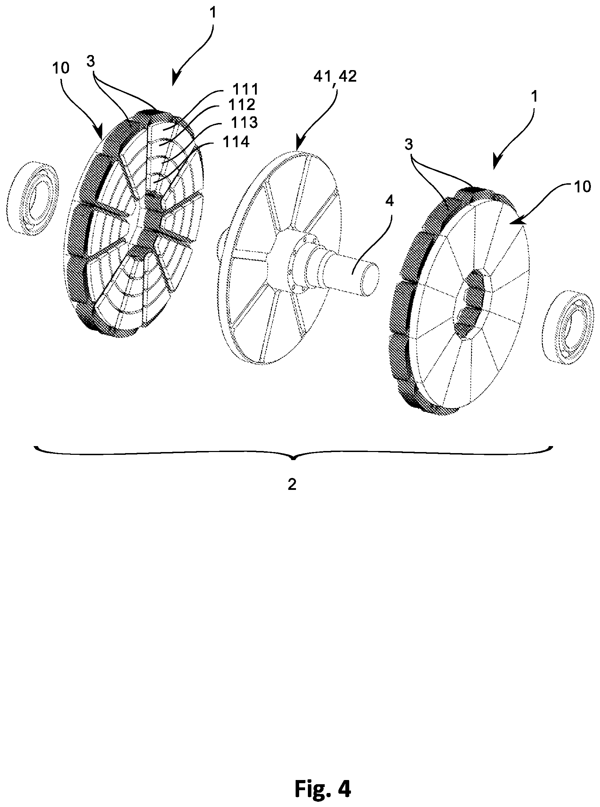

Figur 3 zeigt einen Statorzahn 11 mit einem Statorzahnkörper (oben) und einer Statorzahnwicklung (unten) eines segmentiert aufgebauten Stators 1, wie er in Figur 4 gezeigt ist, in schematischer Darstellung, in einer Perspektivansicht. Gut zu erkennen ist in dieser Ansicht, dass ein Statorzahn 11 einzelne Stator-Teilzähne 111, 112, 113, 114 aufweist, die in radialer Richtung jeweils durch eine in Umfangsrichtung verlaufende Trennnut 120 mit axialer Tiefe voneinander getrennt sind. Bodenseitig sind die Stator-Teilzähne 111, 112, 113, 114 über ein plattenartiges Basisteil miteinander verbunden. In der unteren Darstellung ist gut der Aufbau der Statorwicklung 3 erkennbar, wobei die Statorwicklung in Teilgruppen 31, 32, 33, 34 von Wicklungslagen bzw. Teilwicklungen aufgeteilt ist. Im vorliegenden Beispiel ist jeder der Stator-Teilzähne 111, 112, 113, 114 mit einer unterschiedlichen Anzahl von Windungen der Statorwicklung 3 bzw. mit einer eigenen Teilgruppe der Statorwicklung 3 bewickelt. Ausgehend vom radial außen liegenden Stator-Teilzahn 111, der mit zwei Wicklungslagen (in der Trennnut) bewickelt ist, wird der nächste innenliegende Stator-Teilzahn 112 zusätzlich umwickelt, so dass der erste Stator-Teilzahn 111 dann bereits kopfseitig vier und bodenseitig in der Trennnut 120 zwei Wicklungslagen trägt und der mitumwickelte zweite Stator-Teilzahn 112 kopfseitig die zwei Wicklungslagen in der ersten Trennnut 120 und bodenseitig ebenso zwei Wicklungslagen der zweiten Teilgruppe 32 der Statorwicklung 3 aufweist. Auf diese Weise werden die weiteren zwei Stator-Teilzähne 113, 114 nach und nach mitbewickelt, so dass bei der dargestellten Statorwicklung 3 in jeder Trennnut 120 genau zwei Wicklungslagen angeordnet sind. Somit wären bei dieser Art der Bewicklung kopfseitig oberhalb und in Umfangsrichtung am ersten Stator-Teilzahn 111, 4 x 2 Wicklungslagen - also insgesamt mindestens acht Wicklungslagen, bewickelt. Tatsächlich ist der Statorzahn 11 aber noch mit zwei zusätzlichen Wicklungslagen von außen umwickelt, so dass hier insgesamt zehn Wicklungslagen zusammenkommen.

Figur 4 zeigt eine Axialflussmaschine 2 in I-Anordnung mit zwei einen Rotorkörper 41, 42 mittig zwischen sich einschließenden und erfindungsgemäß aufgebauten Statoren 1, in einer Explosionsdarstellung. Der mittig angeordnete Rotorkörper 41, 42 weist axial beidseitig umfänglich verteil jeweils eine Vielzahl von Permanentmagneten auf, die jeweils in Wechselwirkung mit den über einen Luftspalt beabstandeten und bewickelten Statorzahnkörpern stehen.

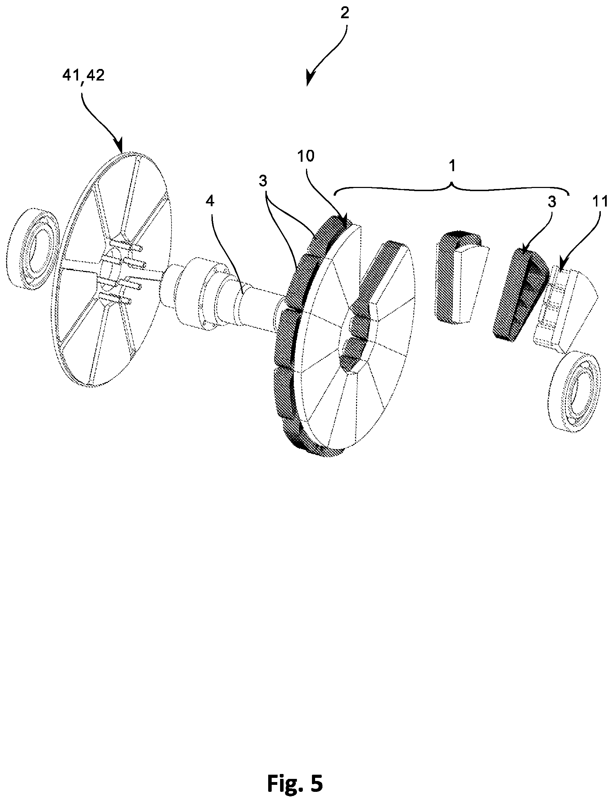

Figur 5 zeigt eine Axialflussmaschine 2, ebenfalls in I-Anordnung, mit nur einem axial zu einem Rotor axial benachbart angeordneten erfindungsgemäß aufgebauten Stator 1, in einer Explosionsdarstellung. Der Stator ist ebenso aufgebaut wie vorstehend beschrieben.

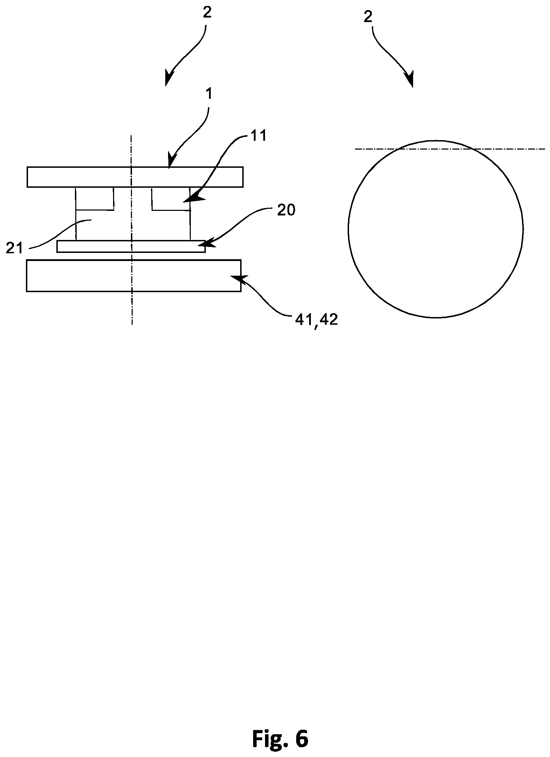

Figur 6 zeigt eine Schnittdarstellung durch eine elektrische Maschine 2 in schematischer Darstellung. In der rechten Darstellung ist die Schnittebene gezeigt, während in der linken Darstellung eine Sicht von oben auf die stark schematisiert dargestellte Schnittebene gezeigt ist. Gut zu erkennen ist der Stator 1 mit einem axial in Richtung Rotorkörper 41, 42 sich erstreckend ausgebildeten Statorzahn 11. Dabei ist ein Teilbereich 21 des Statorzahns 11 an einer auf den Statorzahn 11 axial stirnseitig zu befestigenden Polschuhkappe 20 ausgebildet, so dass der vollständige Statorzahn 11 erst mit Montage der Polschuhkappe 20 gebildet ist. Die Polschuhkappe 20 ist dabei trennbar und mit Vorteil einteilig, über alle Stator-Teilzähne 111, 112, 113, 114 sich erstreckend, stirnseitig am freien axialen Ende einzelner Stator-Teilzähne 111, 112, 113, 114 befestigt. Die an der Polschuhkappe 20 angebrachten Teilbereiche 21 der Statorzähne 11 wirken mit Teilbereichen der Stator-Teilzähne 111, 112, 113, 114 formschlüssig zusammenwirken, derart, dass in umfänglicher bzw. Tangentialrichtung ein Formschluss zur Drehmomentübertragung gewährleistet ist.

Die Erfindung ist nicht auf die in den Figuren dargestellten Ausführungsformen beschränkt. Die vorstehende Beschreibung ist daher nicht als beschränkend, sondern als erläuternd anzusehen. Die nachfolgenden Patentansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Patentansprüche und die vorstehende Beschreibung 'erste' und 'zweite' Merkmal definieren, so dient diese Bezeichnung der Unterscheidung zweier gleichartiger Merkmale, ohne eine Rangfolge festzulegen.

### Bezugszeichenliste

1 Stator
2 Axialflussmaschine
3 Statorwicklung
4 Rotorwelle
10 Statorkörper
11 Statorzahn
111 Stator-Teilzahn
112 Stator-Teilzahn
113 Stator-Teilzahn
114 Stator-Teilzahn
20 Polschuhkappe
21 Teilbereich von Stator-Teilzahn (an Polschuhkappe ausgebildet)
31 Teilgruppe Statorwicklung
32 Teilgruppe Statorwicklung
33 Teilgruppe Statorwicklung
34 Teilgruppe Statorwicklung
41 Rotorkörper
42 Rotorkörper

## Patentansprüche

1. Stator (1) für eine elektrische Axialflussmaschine (2), insbesondere Stator (1) für eine als Antriebsmaschine für ein elektrisch angetriebenes Kraftfahrzeug ausgebildete Axialflussmaschine (2), wobei der Stator (1) aufweist:
einen Statorkörper (10) mit einer Vielzahl von über den Umfang verteilt angeordneten Statorzähnen (11), wobei zumindest einer der Statorzähne (11) in radialer Richtung gesehen in mindestens zwei Stator-Teilzähne (111, 112, 113, 114) aufgeteilt ist, und
Statorwicklungen (3), welche um die Statorzähne (11) herum angeordnet sind,
**dadurch gekennzeichnet, dass**
die zumindest zwei Stator-Teilzähne (111; 112) mit einer unterschiedlichen Anzahl von Windungen der gleichen Phase der Statorwicklung (3) bewickelt sind.

2. Stator (1) nach Anspruch 1, **dadurch gekennzeichnet, dass** jeder der bewickelten Statorzähne (11) in radialer Richtung gesehen in mindestens zwei Stator-Teilzähne (111; 112) aufgeteilt ist.

3. Stator (1) nach Anspruch 1 oder 2, **dadurch gekennzeichnet, dass**
die Statorwicklung (3) eines Statorzahns (11) in zumindest zwei Teilgruppen (31, 32, 33, 34) unterteilt ist,
eine erste Teilgruppe (31) den radial äußersten Stator-Teilzahn (111) umschließt,
jede weitere Teilgruppe (32, 33, 34) jeweils zusätzlich den nächsten radial in Richtung Statormittelachse (X) angeordneten Stator-Teilzahn (112, 113, 114) umschließt, und
die letzte Teilgruppe (34) alle Stator-Teilzähne (111, 112, 113, 114) umschließt.

4. Stator (1) nach einem der Ansprüche 1 bis 3, **dadurch gekennzeichnet, dass**
die Statorwicklung (3) eines Statorzahns (11) in Teilgruppen (31, 32, 33, 34) unterteilt ist,
eine erste Teilgruppe (32, 33) einen zwischen dem radial äußersten Stator-Teilzahn (111) und dem radial innersten Stator-Teilzahn (114) angeordneten Stator-Teilzahn (112, 113) umschließt, und
jede weitere Teilgruppe (31, 32, 34; 31, 33, 34) jeweils zusätzlich den nächsten radial in Richtung Statormittelachse (X) und/oder in Richtung radial von der Statormittelachse (X) weggerichtet angeordneten Stator-Teilzahn (33, 34, 31; 34, 32, 31) umschließt.

5. Stator (1) nach einem der Ansprüche 1 bis 4, **dadurch gekennzeichnet, dass** die zwischen den Stator-Teilzähnen (111, 112, 113, 114) ausgebildeten Trennnuten (120) kreisbogenförmig mit Zentrum in der Statormittelachse (X) oder bogenförmig mit Zentrum außerhalb der Statormittelachse (X) oder geradlinig eine Polygonform bildend ausgebildet sind.

6. Stator (1) nach einem der Ansprüche 1 bis 5, **dadurch gekennzeichnet, dass** eine Polschuhkappe (20) trennbar einteilig, über alle Stator-Teilzähne (111, 112, 113, 114) sich erstreckend, stirnseitig am freien axialen Ende einzelner Stator-Teilzähne (111, 112, 113, 114) befestigt ist.

7. Stator (1) nach Anspruch 6, **dadurch gekennzeichnet, dass** an der Polschuhkappe (20) Teilbereiche (21) einzelner Stator-Teilzähne (111, 112, 113, 114) ausgebildet sind.

8. Stator (1) nach einem der Ansprüche 1 bis 7, **dadurch gekennzeichnet, dass** in zumindest einer der Trennnuten (120) eines Stator-Teilzahns (111, 112, 113, 114), in radialer Richtung gesehen, eine einzige oder maximal zwei Lagen einer Teilgruppe der Statorwicklung () angeordnet sind.

9. Stator (1) nach einem der Ansprüche 1 bis 8, **dadurch gekennzeichnet, dass**
der Stator (1) ausgebildet ist eine elektrische Maschine (2) in H-Anordnung mit axial beidseitig angeordneten Rotorkörpern (41, 42) zu betreiben, und
der Statorkörper (10) spiegelsymmetrisch zu einer Ebene lotrecht zur Drehachse der elektrischen Maschine (2) ausgebildet ist.

10. Elektrische Axialflussmaschine (2), die zumindest einen Stator (1) nach einem der Ansprüche 1 bis 9 und einen auf einer Rotorwelle (4) angeordneten ersten Rotorkörper (41; 42) oder einen ersten Rotorkörper (41) und einen zweiten Rotorkörper (42) aufweist.

## Claims

1. A stator (1) for an electric axial flux machine (2), in particular a stator (1) for an axial flux machine (2) designed as a drive machine for an electrically driven motor vehicle, wherein the stator (1) has:
a stator body (10) with a plurality of stator teeth (11) arranged distributed over the circumference, wherein at least one of the stator teeth (11) is divided into at least two partial stator teeth (111, 112, 113, 114) as viewed in the radial direction, and
stator windings (3) which are arranged around the stator teeth (11), **characterized in that**
the at least two partial stator teeth (111; 112) are wound with a different number of windings of the same phase of the stator winding (3).

2. The stator (1) according to claim 1, **characterized in that** each of the wound stator teeth (11) is divided into at least two partial stator teeth (111; 112) as viewed in the radial direction.

3. The stator (1) according to claim 1 or 2, **characterized in that** the stator winding (3) of a stator tooth (11) is subdivided into at least two subgroups (31, 32, 33, 34):
a first subgroup (31) encloses the radially outermost partial stator tooth (111),
each further subgroup (32, 33, 34) additionally encloses the next partial stator tooth (112, 113, 114) arranged radially in the direction of the central stator axis (X), and
the last subgroup (34) encloses all partial stator teeth (111, 112, 113, 114).

4. The stator (1) according to one of claims 1 to 3, **characterized in that**
the stator winding (3) of a stator tooth (11) is subdivided into subgroups (31, 32, 33, 34):
a first subgroup (32, 33) encloses a partial stator tooth (112, 113) arranged between the radially outermost partial stator tooth (111) and the radially innermost partial stator tooth (114), and
each further subgroup (31, 32, 34; 31, 33, 34) additionally encloses the next partial stator tooth (33, 34, 31; 34, 32, 31) arranged radially in the direction of the central stator axis (X) and/or radially in the direction away from the central stator axis (X).

5. The stator (1) according to one of claims 1 to 4, **characterized in that** the separating grooves (120) formed between the partial stator teeth (111, 112, 113, 114) are in the shape of a circular arc with a centre in the central stator axis (X) or are in the shape of an arc with a centre outside the central stator axis (X) or are rectilinear forming a polygonal shape.

6. The stator (1) according to one of claims 1 to 5, **characterized in that** a pole piece cap (20) is separably fastened in one piece, extending over all partial stator teeth (111, 112, 113, 114), on the end face at the free axial end of individual partial stator teeth (111, 112, 113, 114).

7. The stator (1) according to claim 6, **characterized in that** subregions (21) of individual partial stator teeth (111, 112, 113, 114) are formed on the pole piece cap (20).

8. The stator (1) according to one of claims 1 to 7, **characterized in that**, in at least one of the separating grooves (120) of a partial stator tooth (111, 112, 113, 114) as viewed in the radial direction, one single or at most two layers of a subgroup of the stator winding () are arranged.

9. The stator (1) according to one of claims 1 to 8, **characterized in that**
the stator (1) is designed to operate an electric machine (2) in an H-arrangement with rotor bodies (41, 42) arranged axially on both sides, and
the stator body (10) is designed mirror-symmetric to a plane perpendicular to the axis of rotation of the electric machine (2).

10. An electric axial flux machine (2), having at least one stator (1) according to one of claims 1 to 9 and a first rotor body (41; 42) arranged on a rotor shaft (4) or a first rotor body (41) and a second rotor body (42).

## Revendications

1. Stator (1) pour une machine à flux axial électrique (2), en particulier station (1) pour une machine à flux axial (2) réalisée comme une machine d'entraînement pour un véhicule automobile à entraînement électrique, dans lequel le stator (1) présente :
un corps (10) de stator comportant une pluralité de dents (11) de stator agencées réparties sur la périphérie, dans lequel au moins une des dents (11) de stator est divisée, vue dans la direction radiale, en au moins deux dents partielles (111, 112, 113, 114) de stator, et
des enroulements (3) de stator, lesquels sont agencés autour des dents (11) de stator, **caractérisé en ce que**
les au moins deux dents partielles (111 ; 112) de stator sont bobinées avec un nombre différent de spires de la même phase de l'enroulement (3) de stator.

2. Stator (1) selon la revendication 1, **caractérisé en ce que** chacune des dents (11) de stator bobinées, vue dans la direction radiale, est divisée en au moins deux dents partielles (111 ; 112) de stator.

3. Stator (1) selon la revendication 1 ou 2, **caractérisé en ce que** l'enroulement (3) de stator d'une dent (11) de stator est réparti en au moins deux groupes partiels (31, 32, 33, 34),
un premier groupe partiel (31) entoure la dent partielle (111) de stator radialement la plus à l'extérieur,
chaque autre groupe partiel (32, 33, 34) entoure respectivement de plus la dent partielle (112, 113, 114) de stator suivante agencée radialement en direction de l'axe central (X) de stator et
le dernier groupe partiel (34) entoure toutes les dents (111, 112, 113, 114) de stator.

4. Stator (1) selon l'une des revendications 1 à 3, **caractérisé en ce que**
l'enroulement (3) de stator d'une dent (11) de stator est réparti en groupes partiels (31, 32, 33, 34),
un premier groupe partiel (32, 33) entoure une dent partielle (112, 113) de stator agencée entre la dent partielle (111) de stator radialement la plus à l'extérieur et la dent partielle (114) de stator radialement la plus à l'intérieur et
chaque autre groupe partiel (31, 32, 34 ; 31, 33, 34) entoure respectivement de plus la dent partielle (33, 34, 31 ; 34, 32, 31) de stator suivante agencée radialement en direction de l'axe central (X) de stator et/ou en direction radialement opposée à l'axe central (X) de stator.

5. Stator (1) selon l'une des revendications 1 à 4, **caractérisé en ce que** les rainures de séparation (120) formées entre les dents partielles (111, 112, 113, 114) de stator sont réalisées en forme d'arc de cercle avec le centre dans l'axe central (X) de stator ou en forme d'arc avec le centre en dehors de l'axe central (X) de stator ou en ligne droite formant une forme polygonale.

6. Stator (1) selon l'une des revendications 1 à 5, **caractérisé en ce qu'**un capot de pièce polaire (20) est fixé de manière séparable en une seule pièce, s'étendant sur toutes les dents partielles (111, 112, 113, 114) de stator, côté frontal sur l'extrémité axiale libre de dents partielles (111, 112, 113, 114) de stator individuelles.

7. Stator (1) selon la revendication 6, **caractérisé en ce que**, sur le capot de pièce polaire (20), des zones partielles (21) de dents partielles (111, 112, 113, 114) de stator individuelles sont réalisées.

8. Stator (1) selon l'une des revendications 1 à 7, **caractérisé en ce que** dans au moins l'une des rainures de séparation (120) d'une dent partielle (111, 112, 113, 114) de stator, vue dans la direction radiale, une seule couche ou au maximum deux couches d'un groupe partiel de l'enroulement () de stator sont agencées.

9. Stator (1) selon l'une des revendications 1 à 8, **caractérisé en ce que**
le stator (1) est réalisé pour exploiter une machine électrique (2) dans un agencement en H avec des corps de rotor (41, 42) agencés axialement des deux côtés et
le corps de stator (10) est réalisé avec une symétrie spéculaire par rapport à un plan perpendiculaire à l'axe de rotation de la machine électrique (2).

10. Machine à flux axial électrique (2), qui présente au moins un stator (1) selon l'une des revendications 1 à 9 et un premier corps de rotor (41 ; 42) agencé sur un arbre (4) de rotor ou un premier corps (41) de rotor et un second corps (42) de rotor.
